# EUROPEAN PATENT APPLICATION

(11) **EP 4 744 843 A1**
(43) Date of publication of application: **20.05.2026**
(21) Application number: 24839734.1
(22) Date of filing: 09.07.2024
(51) Int. Cl.: B25J 13/08

(54) **INFORMATION PROCESSING PROGRAM AND PICKING DEVICE**

(30) Priority: 10.07.2023 JP 2023113066
(71) Applicant: KOWA COMPANY, LTD., Aichi 460-8625 (JP)
(72) Inventor: IWASAKI, Toru, Tokyo 102-0073 (JP)
(74) Representative: Mathys & Squire
(86) International application number: PCT/JP2024/024691
(87) International publication number: WO 2025/013844

(57) **Abstract**

In order to accurately specify a recommended picking position for a picking target, distance information from a viewpoint from which an opening of a storage container is included in a photographing range is acquired based on distance information acquisition means, mapping data in which the distance information including a point cloud is three-dimensionally mapped based on position information of each point is generated, distance information missing portions at which the distance information is continuously missing in a direction of dividing a contour line of an outer contour portion are formed at a plurality of positions corresponding to the outer contour portion of the storage container on the mapping data at predetermined intervals in the outer contour portion, point cloud group classification is performed by executing processing of determining whether or not to group a plurality of adjacent points as the same group based on the degree of approximation of pieces of the distance information of the plurality of adjacent points for all points on the mapping data on which the distance information missing portions are formed, and the recommended picking position is specified based on a predetermined rule for each group of the mapping data.

## Description

### Technical Field

The present invention relates to an information processing program and a picking device for accurately specifying a recommended picking position for a picking target.

### Background Art

Hitherto, in a stage of shipment from a factory, a distribution base, or the like, work such as sorting of cargos, transshipment, or unloading has been automated by a robot. Cargos handled by such a robot also include a bag-shaped picking target.

For example, Patent Literature 1 has already been proposed as a technology for accurately recognizing a bag-shaped picking target. Patent Literature 1 discloses a technology in which a discontinuous portion is regarded as a boundary between a plurality of bag-shaped workpieces based on angles of normal vectors of three-dimensional shapes of the bag-shaped workpieces, a different label value is assigned to each bag-shaped workpiece, and a position and a posture of the bag-shaped workpiece are recognized for each label value.

### Citation List

### Patent Literature

Patent Literature 1: JP 2010-256209 A

### Summary of Invention

### Technical Problem

By the way, there is a method of discriminating the picking target by acquiring distance information to the picking target and determining a portion where the distance information rapidly changes as a boundary of the object. The same idea applies to the technology of Patent Literature 1 in which a portion where the angle of the normal vector becomes discontinuous (a portion where the angle abruptly changes) is regarded as a boundary of the bag-shaped picking target. Such a discrimination method is effective to some extent also for a bag-shaped picking target, but there is a possibility that a failure occurs under a specific condition. Specifically, since the bag-shaped picking target has a packaging shape whose shape easily changes, the shape and the position of the bag-shaped picking target tend to change each time within a storage container as compared with a box-shaped object, and the bag-shaped picking target may come into close contact with an upper end portion of a wall surface of the storage container at the same height. In such a situation, when the discrimination is performed based on the distance information, it cannot be determined that there is a boundary at a portion of the bag-shaped picking target, which is in close contact with the upper end portion of the wall surface of the storage container at the same height, and there is a possibility that the bag-shaped picking target that is in close contact with the upper end portion of the wall surface of the storage container, and the upper end portion of the wall surface of the storage container are determined to be the same object. In such a situation, if processing of specifying a barycentric position of a region discriminated as the same object as a recommended picking position is executed, there is a problem that a position greatly deviated from the actual barycentric position is recognized as the barycenter due to an influence of the storage container which is erroneously discriminated as being integrated with the bag-shaped picking target, and as a result, picking processing fails.

The present invention has been made in view of the above problems, and an object of the present invention is to provide an information processing program and a picking device for accurately specifying a recommended picking position for a picking target.

### Solution to Problem

An information processing program according to the present invention is an information processing program for causing a computer to implement processing for specifying a recommended picking position for at least one picking target stored in a storage container whose at least upper surface is opened, the information processing program causing the computer to implement: a distance information acquisition function of acquiring distance information from a viewpoint from which an opening of the storage container is included in a photographing range based on distance information acquisition means; a mapping data generation function of generating mapping data in which the distance information including a point cloud is three-dimensionally mapped based on position information of each point; a distance information missing portion formation function of forming distance information missing portions at which the distance information is continuously missing in a direction of dividing a contour line of an outer contour portion at a plurality of positions corresponding to the outer contour portion of the storage container on the mapping data at predetermined intervals in the outer contour portion; a group classification function of performing point cloud group classification by executing processing of determining whether or not to group a plurality of adjacent points as the same group based on a degree of approximation of pieces of the distance information of the plurality of adjacent points for all points on the mapping data on which the distance information missing portions are formed; and a recommended picking position specifying function of specifying the recommended picking position based on a predetermined rule for each group of the mapping data.

Furthermore, in the information processing program according to the present invention, the recommended picking position specifying function further specifies, as the recommended picking position, a barycentric position of a distribution region of the point cloud of each group.

The information processing program according to the present invention further causes the computer to implement a picking target determination function of determining, as the picking target, a group including a point cloud of a predetermined threshold or more among the respective groups classified by the group classification function.

Furthermore, in the information processing program according to the present invention, the distance information missing portion forming function further sets an interval at which the distance information missing portion is formed in advance to be shorter than an assumed length of a short side of the picking target in plan view.

A picking device according to the present invention is a picking device that executes picking processing after specifying a recommended picking position for at least one picking target stored in a storage container whose at least upper surface is opened, the picking device including: a picking robot including a hand portion that picks the picking target; distance information acquisition means for acquiring distance information to the picking target; and a control unit that controls a picking operation of the picking robot, wherein the control unit includes: a distance information acquisition unit that acquires the distance information from a viewpoint from which an opening of the storage container is included in a photographing range based on the distance information acquisition means; a mapping data generation unit that generates mapping data in which the distance information including a point cloud is three-dimensionally mapped based on position information of each point; a distance information missing portion formation unit that forms distance information missing portions at which the distance information is continuously missing in a direction of dividing a contour line of an outer contour portion at a plurality of positions corresponding to the outer contour portion of the storage container on the mapping data at predetermined intervals in the outer contour portion; a group classification unit that performs point cloud group classification by executing processing of determining whether or not to group a plurality of adjacent points as the same group based on a degree of approximation of pieces of the distance information of the plurality of adjacent points for all points on the mapping data on which the distance information missing portions are formed; and a recommended picking position specifying unit that specifies the recommended picking position based on a predetermined rule for each group of the mapping data.

### Advantageous Effects of Invention

According to the present invention, even in a situation in which the picking target is in close contact with the upper end portion of the wall surface of the storage container at the same height, an area by which the picking target and the upper end portion of the wall surface of the storage container are determined to be the same object can be reduced to an extremely small value by forming the distance information missing portions at predetermined intervals in a portion corresponding to the outer contour of the storage container and then performing group classification based on the distance information, so that the recommended picking position can be accurately specified.

### Brief Description of Drawings

Fig. 1 is an explanatory diagram for describing an overall configuration of a picking device corresponding to an embodiment of the present invention.
Fig. 2 is a block diagram illustrating an example of a configuration of a control unit in the picking device corresponding to the embodiment of the present invention.
Fig. 3 is a flowchart illustrating an example of a flow of information processing corresponding to the embodiment of the present invention.
Fig. 4 is an image diagram illustrating an example of captured image data acquired by the control unit in the picking device corresponding to the embodiment of the present invention.
Fig. 5 is an image diagram illustrating an example of mapping data in which distance information acquired by the control unit in the picking device corresponding to the embodiment of the present invention is mapped.
Fig. 6 is an image diagram illustrating an example of a state in which group classification is directly applied to the mapping data generated by the control unit in the picking device corresponding to the embodiment of the present invention.
Fig. 7 is an image diagram illustrating an example of a state in which distance information missing portions are formed at a plurality of positions at predetermined intervals on the mapping data generated by the control unit in the picking device corresponding to the embodiment of the present invention.
Fig. 8 is an image diagram illustrating an example of a state in which the group classification is applied to the mapping data on which the distance information missing portions are formed in the control unit in the picking device corresponding to the embodiment of the present invention.

### Description of Embodiments

Hereinafter, an example of a picking device according to an embodiment of the present invention will be described with reference to the drawings.

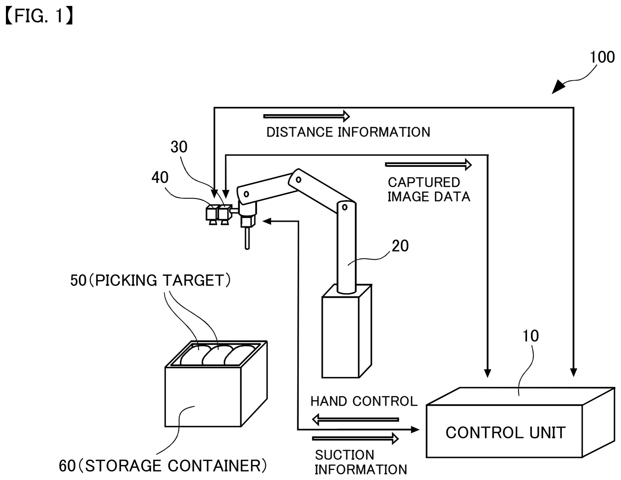

Fig. 1 is an explanatory diagram for describing an overall configuration of the picking device corresponding to the embodiment of the present invention. As illustrated in Fig. 1, a picking device 100 includes a control unit 10 that controls each component, a picking robot 20, a two-dimensional camera 30, and distance information acquisition means 40. Furthermore, in the present example, a situation is assumed in which a picking target 50 stored in a storage container 60 is picked by the picking robot 20. The picking device 100 of the present example is characterized in that the picking target and an upper end portion of a wall surface of the storage container are prevented from being determined to be the same object in processing of point cloud group classification based on continuity of distance information by forming distance information missing portions in a portion corresponding to an outer contour portion of the storage container in mapping data in which the distance information is mapped. The processing is implemented in the control unit (information processing device) 10.

The control unit 10 is configured to control photographing by the two-dimensional camera 30, acquisition of the distance information by the distance information acquisition means 40, and a picking operation by the picking robot 20. The control unit 10 may be implemented by any means as long as control described below can be performed, and is implemented by, for example, a computer, a microcomputer, a programmable logic controller (PLC), or a combination thereof. Among these, the computer includes a central processing unit (CPU), a memory, and a storage such as a hard disk drive or a solid state drive (SSD), which are normally included in a general computer, includes an input device such as a mouse or a keyboard, an output device such as a display or a printer, and a communication device for connecting to a communication network, and may have a configuration in which these are connected via a bus. Processing in each unit of the information processing device 10 is implemented by reading a program for executing the processing in each unit from the memory and executing the program in the CPU, a graphics processing unit (GPU), or a field programmable gate array (FPGA) that functions as a control circuit (processing circuit or processing circuitry). In other words, a processor (processing circuit) is configured to be able to execute each processing in each device by executing the program. In addition, a configuration in which processing up to acquisition of information regarding a recommended picking position for the picking target is executed in the computer, and operation control of the picking robot 20 using the information regarding the recommended picking position is implemented using the PLC is also conceivable. In addition, it goes without saying that various data used in the control unit 10 and various data obtained as a result of processing by the control unit 10 are appropriately stored in a storage unit.

The picking robot 20 is a robot including a hand portion that picks the picking target. In the present example, the picking robot 20 including a suction hand that sucks and lifts the picking target will be described. An operation of the picking robot 20 is controlled by the control unit 10 described below.

The two-dimensional camera 30 is provided in the vicinity of the hand portion of the picking robot 20, and is configured to two-dimensionally photograph the picking target. A photographing angle can be variously set as long as the picking target can be photographed. However, in the case of a configuration in which a top surface of the picking target is sucked and grasped as in the present example, it is preferable to install the two-dimensional camera 30 so as to perform photographing from above such that an image of the top surface of the picking target is captured. The photographing by the two-dimensional camera 30 is controlled by the control unit 10 described below. Note that, in the present invention, captured image data obtained by the two-dimensional camera 30 is not essential, but can be used for accurate picking by the hand portion of the picking robot 10 by calibration with the mapping data in which the distance information is mapped, or the like.

The distance information acquisition means 40 is configured to acquire the distance information to the picking target. Any means may be used as long as the distance information to the picking target can be acquired. For example, a configuration of extracting the distance information using a stereo camera is conceivable. In addition, the distance information may be acquired using a time-of-flight (TOF) camera or a light detection and ranging or laser imaging detection and ranging (LiDAR). The distance information is acquired as three-dimensional point cloud information. In the distance information acquisition means 40, execution of photographing is controlled by the control unit 10 described below. As for the distance information acquisition means 40, the photographing angle can be variously set as long as the picking target can be photographed. However, in the case of a configuration assuming that the top surface of the picking target is sucked and grasped, it is preferable to install the distance information acquisition means 40 so as to perform photographing from above such that the image of the top surface of the picking target is captured. Note that, in the example of Fig. 1, the two-dimensional camera 30 and the distance information acquisition means 40 are installed adjacent to each other so as to have substantially the same photographing angle. In addition, in a case where a stereo camera is adopted as the distance information acquisition means, one piece of captured image data of the stereo camera can be handled in the same manner as the captured image data of the two-dimensional camera 30, and thus, the two-dimensional camera 30 can be eliminated.

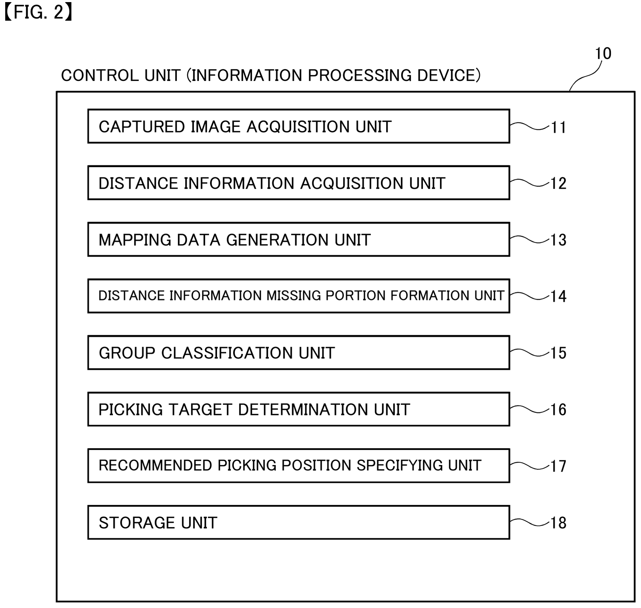

Fig. 2 is a block diagram illustrating an example of a configuration of the control unit in the picking device corresponding to the embodiment of the present invention. As illustrated in Fig. 2, the control unit (information processing device) 10 includes a captured image acquisition unit 11, a distance information acquisition unit 12, a mapping data generation unit 13, a distance information missing portion formation unit 14, a group classification unit 15, a picking target determination unit 16, a recommended picking position specifying unit 17, and a storage unit 18.

The captured image acquisition unit 11 has a function of controlling the two-dimensional camera 30 to acquire the captured image data obtained by photographing the entirety of one or more picking targets stored in the storage container whose at least upper surface is opened.

The distance information acquisition unit 12 has a function of acquiring the distance information from a viewpoint from which an opening of the storage container storing the picking target is included in an imaging range based on the distance information acquisition means. Here, the distance information refers to information obtained by calculating a distance to an object present in the imaging range for each measurement point. Note that, in a case where a stereo camera is adopted as the distance information acquisition means, the captured image acquisition unit 11 may acquire two pieces of captured image data captured by the stereo camera, and the distance information acquisition unit 12 may extract parallax information between the two pieces of captured image data and calculate the distance information to each point based on the parallax information.

The mapping data generation unit 13 has a function of generating the mapping data in which the distance information including a point cloud is three-dimensionally mapped based on position information of each point. Since point cloud data included in the distance information is not necessarily in a three-dimensionally mapped state depending on an acquisition method thereof, three-dimensional mapping is performed based on the position information of each point for the acquired distance information to generate the mapping data. Note that, in the mapping data generated here, for example, only the distance information in a range that can correspond to a distance to a picking location for the picking target may be extracted by providing a threshold for the distance information to be used, and the other distance information does not have to be mapped. Alternatively, filtering may be performed based on a threshold after mapping is performed for all points, so that only the distance information within a predetermined distance range is reflected in the mapping data.

The distance information missing portion formation unit 14 has a function of forming the distance information missing portions, at which the distance information is continuously missing in a direction of dividing a contour line of the outer contour portion, at a plurality of positions corresponding to the outer contour portion of the storage container on the mapping data at predetermined intervals in the outer contour portion. The distance information missing portion refers to a portion where the distance information is intentionally missing from the mapping data in which the point cloud is mapped. The reason why the distance information missing portion is formed in the outer contour portion (which means an outer contour of the wall surface surrounding the opening of the storage container when the opening is observed from above) of the storage container is to prevent the entire wall surface portion forming the opening of the storage container from being classified as one group at the time of group classification. Therefore, it is necessary to determine a missing width of the distance information missing portion such that two pieces of distance information separated by the distance information missing portion are not classified as the same group even if a predetermined rule related to the group classification is followed. Further, the distance information missing portions are formed at a plurality of positions at predetermined intervals. That is, it is preferable that the outer contour portion of the storage container is finely divided by the plurality of distance information missing portions. In addition, in a case where a length of the distance information missing portion is excessively large, the distance information is lost more than necessary. Therefore, the length is preferably as small as possible as long as a thickness of the wall surface of the storage container can be reliably divided.

In addition, any method may be used for specifying a region where the distance information missing portion is to be formed in the distance information missing portion formation unit 14. However, in the present example, in order to be able to cope with a situation in which a relative positional relationship between the picking robot and the storage container is not fixed, the method is preferably a method capable of appropriately forming the distance information missing portion in the outer contour portion regardless of a posture of the storage container. As an example of the method of specifying the region where the distance information missing portion is to be formed, a method in which a user designates the outer contour portion of the storage container on the image acquired by the captured image acquisition unit 11 and indicated by the captured image data is considered. When the outer contour portion of the storage container is designated on the captured image data, the portion designated by the user is also specified in the captured image data and the calibrated mapping data, and thus, the distance information missing portion is formed at the designated portion.

As another example of the method of specifying the region where the distance information missing portion is to be formed, a method of specifying the outer contour portion of the storage container by image processing may be used. It is conceivable to obtain information specifying the outer contour portion of the storage container by acquiring the captured image data with the captured image acquisition unit 11 and inputting the captured image data to a learned model that has learned in advance about outputting the information specifying the outer contour portion of the storage container. The learned model may be any model, and for example, a learned model including a neural network is conceivable. For example, coordinate information indicating positions of four corners of the rectangular parallelepiped opening is considered as the information specifying the outer contour portion of the storage container. Information desired to be specified by the image processing is the contour line of the outer contour of the storage container, and it is sufficient if only the contour line can be specified even when an arrangement of the picking target in the storage container cannot be specified.

As another example of the method of specifying the region where the distance information missing portion is to be formed, in a case where a shape of the storage container to be used is determined in advance, information such as a shape of the outer contour portion of the storage container (or a shape of the opening), for example, an aspect ratio of a rectangle in plan view, may be registered, and the outer contour of the storage container may be specified by executing pattern matching processing on the captured image data acquired by the captured image acquisition unit 11. At the time of pattern matching, it is preferable to prepare a plurality of patterns so as to be able to absorb a difference in appearance due to the photographing angle or a photographing distance, or to perform the pattern matching by a method capable of automatically absorbing a distortion due to the photographing angle or a difference in size due to the photographing distance. If the outer contour of the storage container can be specified by the pattern matching, it is possible to accurately set the region where the distance information missing portion is to be formed. In a situation in which the storage container to be used is determined in advance, it can be said that a size of the opening positioned on an inner side of the outer contour is also determined in advance. Therefore, in a stage where the outer contour of the storage container is specified, the distance information missing portion can be appropriately formed so as not to excessively enter an inner side of the opening while reliably dividing the thickness of the wall surface of the storage container. As an example, it is conceivable to register in advance a formation pattern of the distance information missing portions that do not excessively enter the inner side of the opening while reliably dividing the thickness of the wall surface of the storage container, and apply the registered formation pattern to a position of the specified outer contour of the storage container. For example, it is conceivable to register the formation pattern of the distance information missing portions as a formation pattern in which m distance information missing portions having a predetermined length are formed at predetermined intervals on a short side and n identical distance information missing portions are formed at predetermined intervals on a long side in the rectangular outer contour of the storage container. At this time, by determining in advance a length by which the distance information missing portion is to be extended inward from the contour line of the outer contour for each distance information missing portion, it is possible to obtain the formation pattern of the distance information missing portions, in which the distance information missing portion does not excessively enter the inner side of the opening while reliably dividing the thickness of the wall surface of the storage container.

In addition, a method of registering in advance the formation pattern of the distance information missing portions similar to the above is also effective in the case of adopting a specification of manually designating the region where the distance information missing portion is to be formed. For example, in a case where the formation pattern of the distance information missing portions, which corresponds to the rectangular storage container, is registered in advance, manual input of the information specifying the outer contour of the storage container by the user is received by a method in which the user designates the positions of four corners of the storage container on the captured image captured so as to include the opening of the storage container, a method in which the user draws and specifies the outer contour of the storage container, or the like. If the outer contour of the storage container is specified based on the manual input by the user, the formation pattern of the distance information missing portions registered in advance is applied to the specified outer contour of the storage container, whereby the distance information missing portions can be appropriately formed. In addition, instead of the formation pattern of the distance information missing portions, a formation rule of the distance information missing portion may be defined. For example, it is conceivable to set a rule that the distance information missing portions extending straight from the contour line of the outer contour of the storage container are formed at predetermined intervals, and to form the distance information missing portions with respect to the outer contour of the storage container based on the rule in a case where the outer contour of the storage container is manually designated by the user.

The group classification unit 15 has a function of performing point cloud group classification by executing processing of determining whether or not to group a plurality of adjacent points as the same group based on the degree of approximation of the pieces of distance information of the plurality of adjacent points for all points on the mapping data on which the distance information missing portions are formed. The group classification unit 15 performs, by using the distance information, group classification by a method of determining a group according to the degree of approximation of the pieces of distance information of the plurality of adjacent points, that is, determining that the points with similar distance information are in the same group, and determining that the points whose difference in distance information is equal to or more than a predetermined value are in different groups. In addition, any one of a method of performing classification based only on a relationship between two adjacent points or a method of performing classification based further on a relationship with a plurality of surrounding points may be used, and various methods are conceivable. That is, various methods can be adopted for a classification algorithm in the group classification unit 15, and any classification algorithm can be adopted as long as the classification algorithm is intended to classify one picking target as the same group based on the distance information, and classify a boundary portion with another picking target or the storage container as another group.

The picking target determination unit 16 has a function of determining, as the picking target, a group including a point cloud of a predetermined threshold or more among the respective groups classified by the group classification unit 15. In order to exclude a group having no possibility of being the picking target, the picking target determination unit 16 determines, as the picking target, only a group in which the number of points having distance information is equal to or larger than the predetermined threshold. The threshold can be variously set as long as the group having no possibility of being the picking target can be excluded. For example, the threshold may be set so as to exclude a group of regions smaller than a size that can be picked by the picking robot 20, or may be set based on an assumed size of the picking target.

The recommended picking position specifying unit 17 has a function of specifying the recommended picking position based on a predetermined rule for each group of the mapping data. Here, the recommended picking position refers to a recommended position for accurately picking the picking target. Various methods can be considered as a method of specifying the recommended picking position. For example, it is conceivable to set, as the recommended picking position, a barycentric position of a region where the points classified as the same group are distributed.
In addition, it is conceivable to specify, as the recommended picking position, a position where the distance information is flat in a predetermined range centered on the barycentric position instead of directly setting the barycentric position as the recommended picking position. In the case of a bag-shaped picking target, there is a possibility that the barycentric position is in a state in which it is difficult to suck the picking target due to wrinkles, and there is a possibility that a success rate of picking processing increases when a flat portion without wrinkles is set as the recommended picking position within a range that does not adversely affect the picking processing. The recommended picking position is specified for each picking target, and the control unit 10 controls the picking processing based on information regarding the recommended picking position, but the control of the picking process is not directly related to the present invention, and thus the description thereof will be omitted.

The storage unit 18 has a function of storing data necessary for various types of processing executed in the control unit 10 and data obtained as a result of the processing.

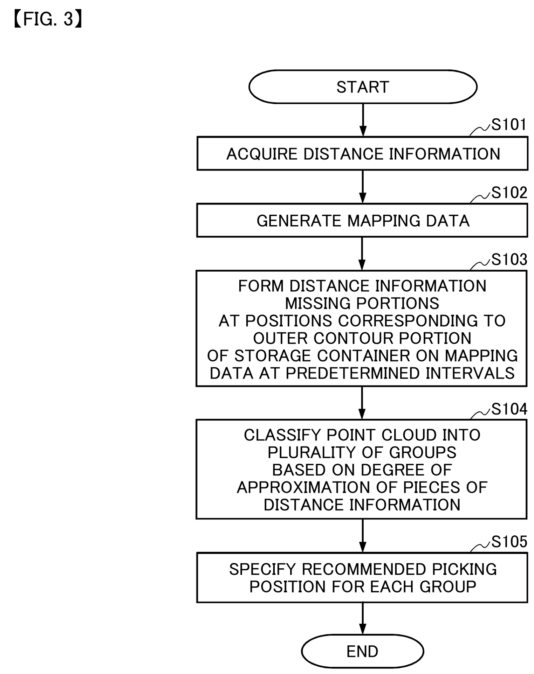

Fig. 3 is a flowchart illustrating an example of a flow of information processing corresponding to the embodiment of the present invention. As illustrated in Fig. 3, the information processing is started in the control unit 10 of the picking device 100 by acquiring the pieces of distance information to the storage container and the picking target from the viewpoint from which the opening of the storage container storing the picking target is included in the photographing range (step S101). Next, the control unit 10 generates the mapping data based on the pieces of distance information (step S102). Next, the control unit 10 forms the distance information missing portions at a plurality of positions corresponding to the outer contour portion of the storage container on the mapping data at predetermined intervals (step S103). Next, the control unit 10 classifies the point cloud included in the mapping data into a plurality of groups based on the degree of approximation of the pieces of distance information (step S104). Then, the control unit 10 specifies the recommended picking position for each group (step S105), and ends the information processing.

Next, processing of specifying the recommended picking position according to the present example will be described using a specific image as an example.

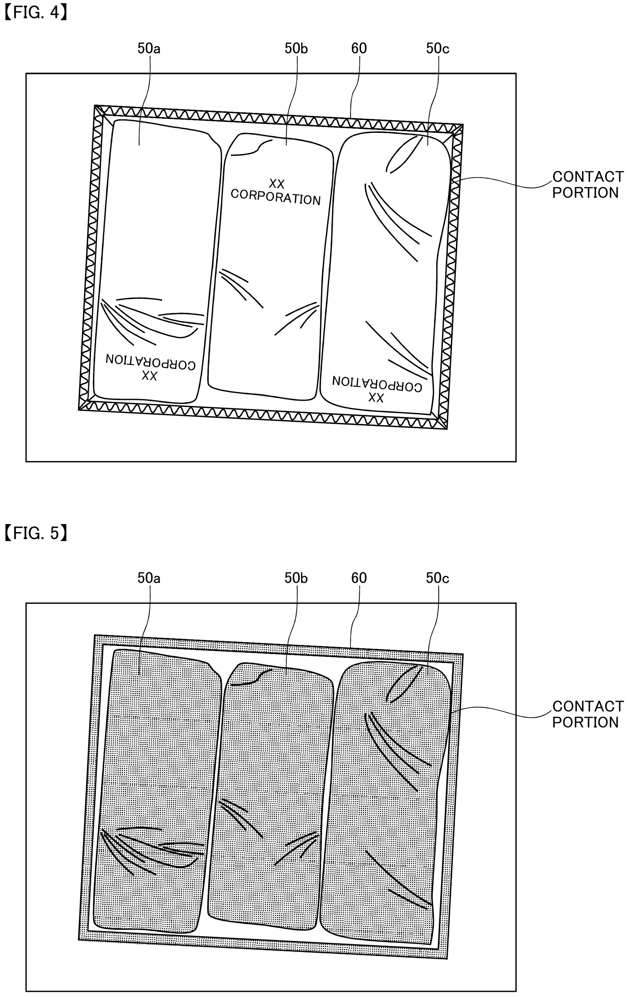

Fig. 4 is an image diagram illustrating an example of the captured image data acquired by the control unit in the picking device corresponding to the embodiment of the present invention. The image diagram illustrated in Fig. 4 represents the captured image data indicating a state in which three bag-shaped picking targets 50a, 50b, and 50c are accommodated in the box-shaped storage container 60 having a rectangular parallelepiped shape and an open upper surface. Here, it is assumed that the picking target 50c is in contact with the storage container 60, and heights of the picking target 50c and the storage container 60 coincide with each other at a contact portion.

Fig. 5 is an image diagram illustrating an example of the mapping data in which the distance information acquired by the control unit in the picking device corresponding to the embodiment of the present invention is mapped. The image diagram illustrated in Fig. 5 represents the mapping data in which the distance information obtained by photographing the same picking target as in Fig. 4 by the distance information acquisition means 40 is mapped.

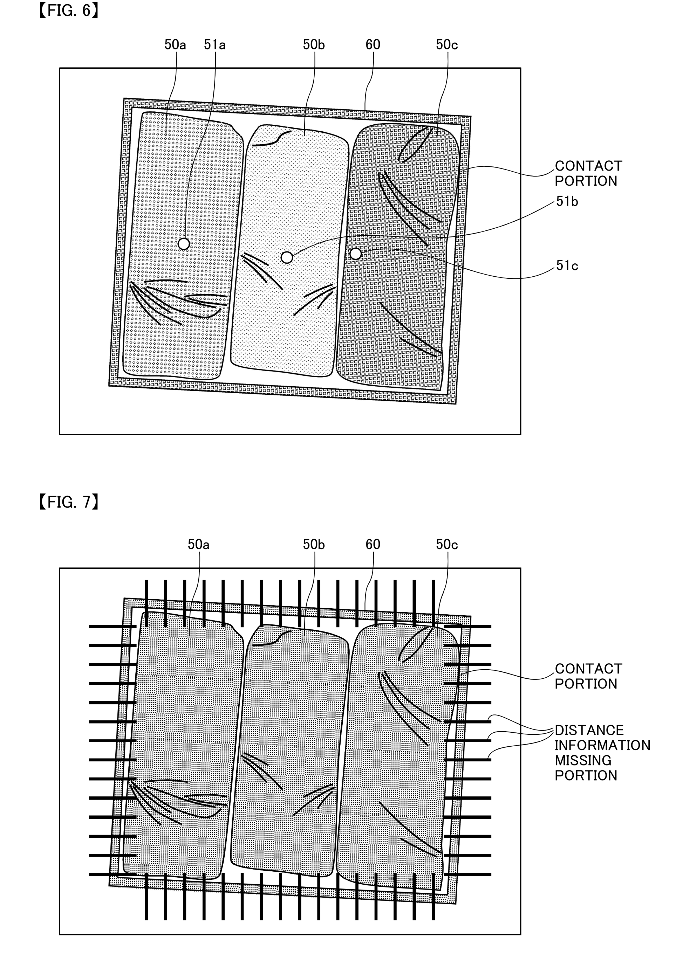

Fig. 6 is an image diagram illustrating an example of a state in which the group classification is directly applied to the mapping data generated by the control unit in the picking device corresponding to the embodiment of the present invention. In the example illustrated in Fig. 6, the picking targets 50a and 50b can be appropriately subjected to the group classification, but for the picking target 50c, the contact portion cannot be determined as a boundary due to an influence of the same height as that of the storage container 60 at the contact portion, and thus, it can be seen that the picking target 50c and the storage container 60 are integrally classified as one group. When the recommended picking position is specified based on such group classification by, for example, a method of extracting the barycentric position, the appropriate positions for the picking targets 50a and 50b can be specified as recommended picking positions 51a and 51b, but the barycentric position of the picking target 50c is greatly shifted to the left due to an influence of the storage container 60 that has been classified as the same group, and thus an end portion is specified as a recommended picking position 51c. When the picking processing for the picking target 50c is executed based on information regarding the recommended picking position 51c, there is a possibility that the picking fails.

Fig. 7 is an image diagram illustrating an example of a state in which the distance information missing portions are formed at a plurality of positions at predetermined intervals on the mapping data generated by the control unit in the picking device corresponding to the embodiment of the present invention. It can be seen that the distance information missing portions are uniformly formed at predetermined intervals in the outer contour portion of the storage container 60.

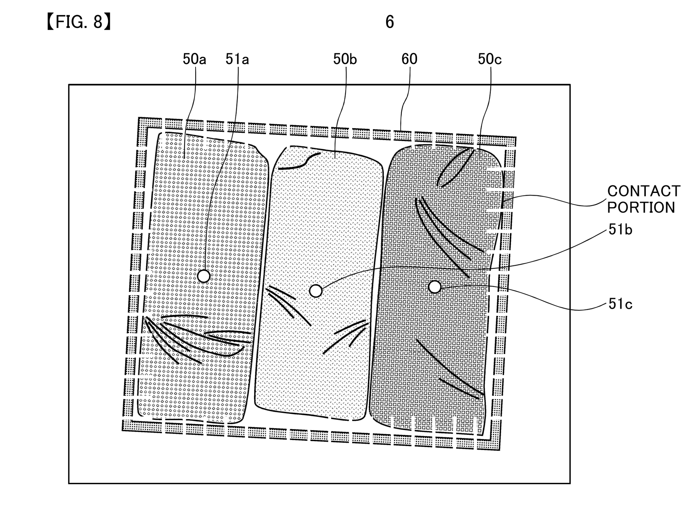

Fig. 8 is an image diagram illustrating an example of a state in which the group classification is applied to the mapping data on which the distance information missing portions are formed in the control unit in the picking device corresponding to the embodiment of the present invention. When the group classification is performed for the mapping data on which the distance information missing portions are uniformly formed at predetermined intervals in the outer contour portion of the storage container 60, the storage container 60 is subdivided and subjected to the group classification as illustrated in Fig. 8, and thus the entire storage container 60 is not integrally grouped as illustrated in Fig. 6. In addition, although there are portions where the distance information missing portions overlap each of the picking targets 50a, 50b, and 50c, it can be seen that even if the distance information missing portions overlap the picking targets 50a, 50b, and 50c, there is no significant influence on the group classification of the picking targets 50a, 50b, and 50c. In addition, although there is a portion where the picking target 50c and the storage container 60 are integrally classified as one group at the contact portion, a region where the storage container 60 is recognized integrally with the picking target 50c can be greatly reduced by the formation of the distance information missing portions. When the recommended picking position is specified based on such group classification by, for example, the method of extracting the barycentric position, it can be seen that the recommended picking position 51c of the picking target 50c that has failed in specification in Fig. 6 can be appropriately specified because there are few regions in which the storage container 60 is integrally grouped with the picking target 50c.

As described above, the picking device 100 according to the present invention includes: the picking robot including the hand portion that picks the picking target; the distance information acquisition means for acquiring the distance information to the picking target; and the control unit that controls a picking operation of the picking robot, in which the control unit includes: the distance information acquisition unit that acquires the distance information from a viewpoint from which the opening of the storage container is included in the photographing range based on the distance information acquisition means; the mapping data generation unit that generates the mapping data in which the distance information including a point cloud is three-dimensionally mapped based on position information of each point; the distance information missing portion formation unit that forms the distance information missing portions at which the distance information is continuously missing in a direction of dividing the contour line of the outer contour portion at a plurality of positions corresponding to the outer contour portion that forms the opening of the storage container on the mapping data at predetermined intervals in the outer contour portion; the group classification unit that performs point cloud group classification by executing processing of determining whether or not to group a plurality of adjacent points as the same group based on the degree of approximation of pieces of distance information of the plurality of adjacent points for all points on the mapping data on which the distance information missing portions are formed; and the recommended picking position specifying unit that specifies the recommended picking position based on the predetermined rule for each group of the mapping data. Therefore, even in a situation in which the picking target is in close contact with the upper end portion of the wall surface of the storage container at the same height, an area by which the picking target and the upper end portion of the wall surface of the storage container are determined to be the same object can be reduced to an extremely small value by forming the distance information missing portions at predetermined intervals in a portion corresponding to the outer contour of the storage container and then performing the group classification based on the distance information, so that the recommended picking position can be accurately specified.

In the above-described embodiment, the rectangular parallelepiped storage container has been described as an example, but the shape of the storage container is not limited thereto. For example, it is also conceivable to use a cylindrical storage container having an upper surface opened. In such a case, the outer contour portion of the storage container is circular. As an example of a method of subdividing the circular outer contour portion at predetermined intervals, the distance information missing portions may be formed radially from the center at a plurality of positions where a radius is a predetermined distance with respect to the outer contour portion of the storage container in the mapping data.

### Reference Signs List

- 100: Picking device
- 10: Control unit
- 11: Captured image acquisition unit
- 12: Distance information acquisition unit
- 13: Mapping data generation unit
- 14: Distance information missing portion formation unit
- 15: Group classification unit
- 16: Picking target determination unit
- 17: Recommended picking position specifying unit
- 18: Storage unit
- 20: Picking robot
- 30: Two-dimensional camera
- 40: Distance information acquisition means
- 50, 50a to 50c: Picking target
- 51a to 51c: Recommended picking position
- 60: Storage container

## Claims

1. An information processing program for causing a computer to implement processing for specifying a recommended picking position for at least one picking target stored in a storage container whose at least upper surface is opened, the information processing program causing the computer to implement:
a distance information acquisition function of acquiring distance information from a viewpoint from which an opening of the storage container is included in a photographing range based on distance information acquisition means;
a mapping data generation function of generating mapping data in which the distance information including a point cloud is three-dimensionally mapped based on position information of each point;
a distance information missing portion formation function of forming distance information missing portions at which the distance information is continuously missing in a direction of dividing a contour line of an outer contour portion at a plurality of positions corresponding to the outer contour portion of the storage container on the mapping data at predetermined intervals in the outer contour portion;
a group classification function of performing point cloud group classification by executing processing of determining whether or not to group a plurality of adjacent points as the same group based on a degree of approximation of pieces of the distance information of the plurality of adjacent points for all points on the mapping data on which the distance information missing portions are formed; and
a recommended picking position specifying function of specifying the recommended picking position based on a predetermined rule for each group of the mapping data.

2. The information processing program according to claim 1, wherein
the recommended picking position specifying function specifies, as the recommended picking position, a barycentric position of a distribution region of the point cloud of each group.

3. The information processing program according to claim 1, causing the computer to
implement a picking target determination function of determining, as the picking target, a group including a point cloud of a predetermined threshold or more among the respective groups classified by the group classification function.

4. The information processing program according to any one of claims 1 to 3, wherein
the distance information missing portion formation function sets an interval for forming the distance information missing portions in advance to be shorter than an assumed length of a short side of the picking target in plan view.

5. A picking device that executes picking processing after specifying a recommended picking position for at least one picking target stored in a storage container whose at least upper surface is opened, the picking device comprising:
a picking robot including a hand portion that picks the picking target;
distance information acquisition means for acquiring distance information to the picking target; and
a control unit that controls a picking operation of the picking robot, wherein the control unit includes:
a distance information acquisition unit that acquires the distance information from a viewpoint from which an opening of the storage container is included in a photographing range based on the distance information acquisition means;
a mapping data generation unit that generates mapping data in which the distance information including a point cloud is three-dimensionally mapped based on position information of each point;
a distance information missing portion formation unit that forms distance information missing portions at which the distance information is continuously missing in a direction of dividing a contour line of an outer contour portion at a plurality of positions corresponding to the outer contour portion of the storage container on the mapping data at predetermined intervals in the outer contour portion;
a group classification unit that performs point cloud group classification by executing processing of determining whether or not to group a plurality of adjacent points as the same group based on a degree of approximation of pieces of the distance information of the plurality of adjacent points for all points on the mapping data on which the distance information missing portions are formed; and
a recommended picking position specifying unit that specifies the recommended picking position based on a predetermined rule for each group of the mapping data.
